(19) Europäisches Patentamt
European Patent Office
Office européen des brevets

(11) **EP 2 773 866 B1**

(12) **EUROPÄISCHE PATENTSCHRIFT**

(45) Veröffentlichungstag und Bekanntmachung des Hinweises auf die Patenterteilung:
**28.11.2018  Patentblatt 2018/48**

(21) Anmeldenummer: **12745801.6**

(22) Anmeldetag: **18.07.2012**

(51) Int Cl.:
*H02K 7/18* *(2006.01)*       *H02P 9/04* *(2006.01)*
*F03D 9/17* *(2016.01)*       *F03B 13/06* *(2006.01)*
*F02C 6/16* *(2006.01)*

(86) Internationale Anmeldenummer:
**PCT/EP2012/064083**

(87) Internationale Veröffentlichungsnummer:
**WO 2013/064276 (10.05.2013 Gazette 2013/19)**

(54) **EINRICHTUNGEN UND VERFAHREN ZUR ENERGIESPEICHERUNG**

UNITS AND METHODS FOR ENERGY STORAGE

DISPOSITIFS ET PROCÉDÉS D'ACCUMULATION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2011  DE 102011117785**
**21.12.2011  DE 102011121738**
**16.02.2012  DE 102012003123**
**16.03.2012  DE 102012005336**
**20.03.2012  DE 102012005571**
**28.03.2012  DE 102012006376**

(43) Veröffentlichungstag der Anmeldung:
**10.09.2014  Patentblatt 2014/37**

(73) Patentinhaber: **erneo Energiespeichersysteme GmbH**
**31515 Wunstorf (DE)**

(72) Erfinder:
• **LITTMANN, Wolfgang**
**31515 Wunstorf (DE)**
• **BÖHM, Norbert**
**96049 Bamberg (DE)**

(74) Vertreter: **Günther, Constantin et al**
**Gramm, Lins & Partner**
**Patent- und Rechtsanwälte PartGmbB**
**Freundallee 13 a**
**30173 Hannover (DE)**

(56) Entgegenhaltungen:
**EP-A1- 0 191 516        EP-B1- 0 212 692**
**WO-A1-93/06367        DE-A1-102010 010 701**
**US-A- 4 353 214        US-A1- 2004 059 692**
**US-A1- 2011 247 323**

EP 2 773 866 B1

**Beschreibung**

Die Erfindung betrifft ein Druckgasspeicherkraftwerk gemäß Anspruch 1 sowie Verfahren zur Energiespeicherung gemäß Anspruch 4.

Allgemein betrifft die Erfindung das Gebiet der Energiespeicherung für aus regenerativen Quellen erzeugte Energie, wie z.B. Windkraft oder Solarstrom. Da diese Arten der Energieerzeugung wetterbedingt mit Unregelmäßigkeiten behaftet sind, gewinnt die Notwendigkeit zur Speicherung von Energie immer größere Bedeutung. Neben der elektrochemischen Speicherung, die relativ aufwendig ist, gibt es bereits Vorschläge, eine Speicherung als mechanische Energie durchzuführen, z.B. in sogenannten Pumpspeicherwasserkraftwerken oder Druckluftspeicherkraftwerken. Pumpspeicherwasserkraftwerke sind bisher an die geologischen obertägigen Bedingungen lokal gebunden und Neuprojekte stoßen aufgrund des sichtbaren Eingriffs in die Natur auf gesellschaftliche Akzeptanzprobleme. Druckluftspeicherkraftwerke sind wegen der Möglichkeit der Untertageinstallation der Hohlräume gesellschaftlich akzeptabel, weisen jedoch bisher relativ niedrige Wirkungsgrade und somit eine geringe Energieeffizienz auf. Pumpspeicherwasserkraftwerke werden daher bisher nur in Landschaften mit entsprechenden Höhenunterschieden realisiert. In Landschaften wie der norddeutschen Tiefebene oder auf offener See, wo ein großer Teil der Windenergie erzeugt wird, erweist sich der Einsatz von konventionellen Pumpspeicherwasserkraftwerken als unrealistisch.

Es gibt bereits Vorschläge, wie z.B. in EP 0 212 692 B1, eine Energiespeicherung in zwei in unterschiedlicher Teufe angeordneten unterirdischen Speicherräumen durchzuführen. Eine Realisierung solcher Vorschläge scheitert aber an den Problemen, entsprechende Pumpmaschinen in großer Tiefe unter der Erdoberfläche zu installieren und zu betreiben, um die verwendete Flüssigkeit von einem unteren Speicherraum in den oberen Speicherraum zu pumpen. Ein Ansaugen von Flüssigkeit von einer überirdisch angeordneten Pumpmaschine aus einem relativ tief gelegenen unteren Speicherraum (z.B. mehrere 100 oder 1000 m tief) ist technisch nicht machbar.

Aus der US 4,353,214 ist ein Energiespeichersystem einer Energiespeicheranlage unter Nutzung eines exothermen Verbrennungsprozesses bekannt.

Der Erfindung liegt daher die Aufgabe zugrunde, eine Einrichtung und ein Verfahren zur Energiespeicherung anzugeben, die eine effiziente Energiespeicherung großer Energiemengen mit verringertem Aufwand und daher kostengünstiger ermöglichen.

Diese Aufgabe wird mit der Einrichtung und dem Verfahren gemäß den unabhängigen Patentansprüchen gelöst. Vorteilhaft können als oberer und unterer Speicherraum bzw. als erster und zweiter Speicherraum insbesondere bereits vorhandene unterirdische Hohlräume verwendet werden, z.B. Kavernen in Salzstöcken oder andere bereits z.B. durch den Bergbau geschaffene unterirdische Hohlräume. Zum Teil können auch überirdische Speicherräume oder vorhandene Energieversorgungsnetze verwendet werden, z.B. Erdgasnetze. Die Erfindung erlaubt eine vielfältige Nutzung vorhandener über- und unterirdischer Hohlräume sowie von vorhandenen Leitungsnetzen.

Die Erfindung eignet sich insbesondere für eine kurzfristige, mittelfristige und/oder langfristige Energiespeicherung.

Mittels der Erfindung kann insbesondere ein lokaler Speicherbedarf von Energie gedeckt werden, der die technischen, ökonomischen und ökologischen und zusätzlich die gesellschaftlichen Anforderungen berücksichtigt und umsetzt. Die Erfindung ist praktikabel umsetzbar mit derzeit erhältlichen technischen Komponenten und Aggregaten. Für die Speicherräume können vorhandene, künstliche Kavernen genutzt werden, die z.B. in der Vergangenheit für die Speicherung von Erdgas, Erdöl oder anderen Stoffen verwendet werden, z.B. Kavernen in natürlichen Salzstöcken. Diese Kavernen können auf einfache Art in den zahlreichen z.B. in Norddeutschland vorhandenen Salstöcken durch Aussolung mit Süßwasser hergestellt werden, oder es können vorhandene, nicht mehr genutzte Kavernen verwendet werden.

Eine nicht-erfindungsgemäße Ausgestaltung betrifft ein Pumpspeicherkraftwerk mit wenigstens einem Untertage angeordneten unteren Speicherraum und wenigstens einem davon getrennten Über- oder Untertage angeordneten oberen Speicherraum, wobei der untere Speicherraum in einer größeren Teufe angeordnet ist als der obere Speicherraum, und mit jeweils wenigstens einer in den oberen Speicherraum und in den unteren Speicherraum geführten Flüssigkeitsleitung, die mit wenigstens einer hydraulischen Kraft- und Arbeitsmaschine des Pumpspeicherkraftwerks verbunden oder über schaltbare Ventile einschließlich gegebenenfalls notwendiger Nebenanlagen verbindbar sind, und mit jeweils wenigstens einer in den oberen Speicherraum und in den unteren Speicherraum geführten Druckgasleitung, die mit einer Druckgas-Kraft- und Arbeitsmaschine des Pumpspeicherkraftwerks verbunden oder über schaltbare Ventile verbindbar sind, wobei das Pumpspeicherkraftwerk dazu eingerichtet ist, ein flüssiges Medium von dem oberen Speicherraum in den unteren Speicherraum und umgekehrt durch die Flüssigkeitsleitungen und die hydraulische Kraft- und Arbeitsmaschine zu transportieren, und die Druckgas-Kraft- und Arbeitsmaschine zum wahlfreien Erzeugen eines Gasdrucks eines Druckgases wenigstens in dem unteren Speicherraum eingerichtet ist, der von einem Gasdruck in dem oberen Speicherraum abweichen kann.

Der Begriff der Teufe ist die bergmännische Bezeichnung für die Tiefe. Die Teufe gibt an, wie tief ein Punkt unter Tage unter einem definierten Referenzpunkt auf der Oberfläche liegt (senkrechter Abstand zwischen den zwei Punkten), z.B. bezogen auf die Erdoberfläche.

Vorteilhaft kann mittels der Druckgas-Kraft- und Arbeitsmaschine ein Gasdruck des Druckgases wenigstens in dem unteren Speicherraum erzeugt werden, der von einem Gasdruck in dem oberen Speicherraum abweichen kann, z.B. komplett unabhängig von dem Gasdruck im oberen Speicherraum sein kann. Der obere Speicherraum ist damit vom unteren Speicherraum hinsichtlich des Gasdrucks entkoppelt, z.B. dadurch, dass keine direkte Verbindung zwischen den Druckgasleitungen besteht. Dies eröffnet die Möglichkeit, durch entsprechende Gasdruckerhöhung in dem unteren Speicherraum den Transport des flüssigen Mediums von dem unteren Speicherraum in den oberen Speicherraum durch den Gasdruck zu unterstützen, entweder derart, dass das flüssige Medium allein durch den erhöhten Gasdruck des unteren Speicherraums in den oberen Speicherraum gefördert wird, oder ggf. durch zusätzliche Unterstützung mittels einer Flüssigkeitspumpe von dem unteren Speicherraum in den oberen Speicherraum gefördert wird. Dies hat wiederum den Vorteil, dass im Bereich des unteren Speicherraums, der sich in großer Tiefe unter der Erdoberfläche befinden kann, keine Flüssigkeitspumpe oder andere Aggregate erforderlich sind. Vielmehr kann der Gasdruck in dem unteren Speicherraum durch an der Erdoberfläche angeordnete Aggregate, wie z.B. eine Kompressionsmaschine, erhöht werden. Dies vereinfacht die Erstellung und Installation der gesamten Anlage sowie die Wartung der Anlage. Insbesondere muss keine Wartung von Maschinen in großer Tiefe unter der Erdoberfläche durchgeführt werden.

Vorteilhaft ist es daher möglich, die hydraulische Kraft- und Arbeitsmaschine Obertage anzuordnen. Auch die Druckgas-Kraft- und Arbeitsmaschine kann Obertage angeordnet werden. Selbstverständlich ist es auch möglich, die genannten Maschinen ganz oder teilweise unter der Erdoberfläche anzuordnen, z.B. in einer geringen Tiefe, etwa im Keller eines Gebäudes, oder auch in einer etwas größeren Tiefe.

Soweit Anlagenteile Obertage installiert sind, bedeutet dies, dass sich diese Anlagenteile an der Erdoberfläche befinden oder nahe oberhalb und/oder nahe unterhalb der Erdoberfläche insgesamt oder in Teilen angeordnet sind.

Durch die unterschiedliche Teufenlage der beiden Speicheräume kann eine Energiespeicherung in Form einer Speicherung von potentieller Energie durchgeführt werden. Wenn Energie gespeichert werden soll, wird das flüssige Medium von dem unteren Speicherraum in den oberen Speicherraum transportiert. Hierzu wird der Gasdruck im unteren Speicherraum mittels der Druckgas-Kraft- und Arbeitsmaschine erhöht. Die Druckgas-Kraft- und Arbeitsmaschine wird dabei mit elektrischer Energie aus einem Energieversorgungsnetz und/oder direkt von Stromanbietern betrieben. Wenn Energie entnommen werden soll, wird das flüssige Medium von dem oberen Speicherraum in den unteren Speicherraum transportiert und dabei durch die hydraulische Kraft- und Arbeitsmaschine geführt, die die potentielle Energie des flüssigen Mediums in elektrische Energie wandelt, z.B. durch eine Turbine mit angeschlossenem Generator, und an ein Energieversorgungsnetz und/oder direkt an Stromabnehmer abgibt.

Das Energieversorgungsnetz kann ein öffentliches und/oder nicht-öffentliches Energieversorgungsnetz sein.

Soweit von einem oberen und einem unteren Speicherraum die Rede ist, bzw. von einem ersten und einem zweiten Speicherraum, umfasst dies auch die Möglichkeit weiterer Speicherräume, wie einem dritten, vierten und sonstigen Speicherräumen. Die weiteren Speicherräume können zu dem oberen und dem unteren Speicherraum in gleicher Teufenlage oder in unterschiedlicher Teufenlage angeordnet sein.

Die Druckgas-Kraft- und Arbeitsmaschine kann insbesondere zum wahlfreien Erzeugen eines Gasdrucks des Druckgases jeweils in dem oberen und dem unteren Speicherraum in unterschiedlicher Größe ausgebildet sein, so dass in dem jeweiligen Speicherraum ein beliebiger Gasdruck wahlfrei eingestellt werden kann. Dies hat den Vorteil, dass neben der Energiespeicherung über das flüssige Medium die gesamte Anlage auch zusätzlich als Druckgasspeicher verwendet werden kann, z.B. für eine kurzfristige oder mittelfristige Energiespeicherung.

Das Pumpspeicherkraftwerk kann eine Steuereinrichtung aufweisen, z.B. in Form einer elektronischen Steuereinrichtung, die die Funktionen der einzelnen Komponenten des Pumpspeicherkraftwerks steuert, z. B. die Druckgas-Kraft- und Arbeitsmaschine und ggf. vorhandene schaltbare Ventile. Die Steuereinrichtung kann dabei insbesondere dazu eingerichtet sein, bestimmte Funktionen auszuführen, wie sie in den Verfahrensansprüchen angegeben sind. Hierzu kann die Steuereinrichtung z.B. programmierbar ausgebildet sein und ein entsprechendes Steuerprogramm ausführen, in das die genannten Funktionen bzw. Verfahrensschritte einprogrammiert sind. Dementsprechend betrifft die Erfindung auch eine dementsprechend ausgebildete Steuereinrichtung mit einem Steuerprogramm sowie ein Steuerprogramm, das zur Ausführung der Verfahrensschritte eingerichtet ist, wenn es auf der Steuereinrichtung ausgeführt wird. Das Steuerprogramm kann auf einem Datenträger gespeichert sein.

Gemäß einer vorteilhaften Weiterbildung ist die Steuereinrichtung dazu eingerichtet, durch Steuerung der Druckgas-Kraft- und Arbeitsmaschine den Gasdruck in dem unteren Speicherraum zu erhöhen, wenn das flüssige Medium von dem unteren Speicherraum in den oberen Speicherraum transportiert werden soll. Dies ist z.B. erforderlich, wenn Energie in dem Pumpspeicherkraftwerk eingespeichert werden soll. In diesem Fall kann durch die Gasdruckerhöhung in dem unteren Speicherraum der Transport des flüssigen Mediums in den oberen Speicherraum unterstützt werden oder sogar vollständig ohne zusätzliche Pumpe durchgeführt werden.

Bei einer Energieabgabe aus dem Pumpspeicherkraftwerk ist das flüssige Medium von dem oberen Speicherraum in den unteren Speicherraum zu transportieren, was aufgrund der Schwerkraft erfolgt. Da das flüssige Medium hierbei zur Energieabgabe an ein Energieversorgungsnetz und/oder direkte Stromabnehmer durch die genannte hydraulische Kraft- und Arbeitsmaschine geführt werden soll, ist es vorteilhaft, den oberen mit dem unteren Speicherraum über die hydraulische Kraft- und Arbeitsmaschine mittels der Flüssigkeitsleitungen leckagefrei und ohne Gaseinschlüsse zu verbinden, wenn die hydraulische Kraft- und Arbeitsmaschine oberhalb des oberen Speicherraums angeordnet ist.

Gemäß einer vorteilhaften Weiterbildung ist die Flüssigkeitsleitung und/oder die Druckgasleitung von oben oder von der Seite in den oberen bzw. in den unteren Speicherraum geführt. Dies hat den Vorteil, dass die entsprechende Leitung auf einfache Weise in den Speicherraum eingebracht werden kann, z.B. durch eine Bohrung von der Erdoberfläche her, die senkrecht oder schräg verlaufen kann. Insbesondere können auf diese Weise von unten an einen Speicherraum geführte Leitungen, wie in EP 0 212 692 B1 beschrieben, vermieden werden, was den Vorteil hat, dass eine in der Praxis extrem aufwendige Leitungsführung von unten an einen Speicherraum vermieden werden kann. Dadurch wird auch vermieden, dass Feststoffe über die Verbindungsleitung in die Kraftmaschinen und Pumpen gelangen können.

Gemäß einer vorteilhaften Weiterbildung weist die Druckgas-Kraft- und Arbeitsmaschine wenigstens eine Kompressionsmaschine zur Erzeugung komprimierten Druckgases und eine Expansionsmaschine zur Abgabe von Energie an ein öffentliches und/oder nicht-öffentliches Energieversorgungsnetz und/oder direkt an Stromabnehmer durch Expansion von Druckgas aus dem oberen bzw. dem unteren Speicherraum auf. Die Kompressionsmaschine kann z.B. als elektrisch angetriebener Kompressor ausgebildet sein. Die Expansionsmaschine kann z.B. als Druckgasturbine mit damit verbundenem elektrischen Generator ausgebildet sein. Dies hat den Vorteil, dass mit der Druckgas-Kraft- und Arbeitsmaschine nicht nur das komprimierte Druckgas erzeugt werden kann, sondern bei der Expansion auch wieder Energie aus dem Druckgas zurück gewonnen und an das Energieversorgungsnetz und/oder direkt an Stromabnehmer abgegeben werden kann. Die gesamte Energieeffizienz des Pumpspeicherkraftwerks wird dadurch weiter erhöht. Zudem wird die Eignung des Pumpspeicherkraftwerks für eine kurz- und mittelfristige Energiespeicherung verbessert.

Gemäß einer vorteilhaften Weiterbildung ist die Steuereinrichtung dazu eingerichtet, bei der Expansion von komprimiertem Druckgas in der Expansionsmaschine durch Steuerung der hydraulischen Kraft- und Arbeitsmaschine das flüssige Medium in denjenigen Speicherraum, aus dem das Druckgas entnommen wird, von dem jeweils anderen Speicherraum zu übertragen. Hierdurch wird die expansionsbedingte Abkühlung reduziert und der Spielraum für das Fahren der Kaverne, d.h. des entsprechenden Speicherraums, (Druckabsenkung bzw. Temperaturabsenkung pro Zeiteinheit) erweitert werden. Insbesondere kann der Druck in dem Speicherraum gehalten werden und es kommt zu keiner Abkühlung beim Entspannungsvorgang in dem Speicherraum. Bei der Entspannung ist dann nur noch die Wärme dem Prozess zuzuführen, die in der Expansionsmaschine benötigt wird.

Gemäß einer vorteilhaften Weiterbildung ist die Steuereinrichtung dazu eingerichtet, bei der Expansion von komprimierten Druckgas in der Expansionsmaschine durch Steuerung der hydraulischen Kraft- und Arbeitsmaschine soviel flüssiges Medium in denjenigen Speicherraum, aus dem das Druckgas entnommen wird, einzuleiten, dass der Gasdruck in diesem Speicherraum im Wesentlichen gleich bleibt oder zumindest nicht wesentlich absinkt. Hiermit kann ein vorteilhafter im Wesentlichen isobarer Betrieb des Speicherraums realisiert werden. Die Steuereinrichtung weist dabei entsprechende Sensoren auf bzw. ist mit entsprechenden Sensoren verbunden, um diese Funktion auszuführen.

Gemäß einer vorteilhaften Weiterbildung ist die Steuereinrichtung dazu eingerichtet, bei der Expansion von komprimiertem Druckgas in der Expansionsmaschine durch Steuerung der hydraulischen Kraft- und Arbeitsmaschine soviel flüssiges Medium in denjenigen Speicherraum, aus dem das Druckgas entnommen wird, einzuleiten, dass die Temperatur des Druckgases in diesem Speicherraum erhöht wird. Die Steuereinrichtung weist dabei entsprechende Sensoren auf bzw. ist mit entsprechenden Sensoren verbunden, um diese Funktion auszuführen.

Gemäß einer vorteilhaften Weiterbildung ist ein Wärmekreislauf vorhanden, der wenigstens einen von dem Druckgas durchströmten Wärmetauscher und wenigstens einen von dem flüssigen Medium durchströmten Wärmetauscher aufweist, wobei die Wärmetauscher gesteuert derart verbindbar sind, dass bei der Kompression des Druckgases entstandene Wärme in das flüssige Medium überführt wird und/oder bei der Entspannung des Druckgases Wärme von dem flüssigen Medium in das Druckgas überführt wird. Hierdurch können insbesondere die durch Kompression und Expansion des Druckgases entstehenden Temperaturänderungen als Energie genutzt werden bzw. über das flüssige Medium zwischengespeichert werden und zu einem anderen Zeitpunkt wieder an das Druckgas abgegeben werden.

Gemäß einer vorteilhaften Weiterbildung ist die Steuereinrichtung dazu eingerichtet, während der Expansion des Druckgases aus dem unteren Speicherraum das Druckgas durch Steuerung des Wärmekreislaufs mittels der Wärmetauscher im Gegenstrom mit dem aus dem oberen Speicherraum entnommenen flüssigen Medium vorzuwärmen. Dies hat den Vorteil, dass eine während der Expansion des Druckgases eintretende Temperaturabsenkung ganz oder teilweise kompensiert werden kann, so dass eine effiziente isotherme Expansion realisiert werden kann.

Gemäß einer vorteilhaften Weiterbildung ist die Steuereinrichtung dazu eingerichtet, die zeitliche Änderung des Gasdrucks des Druckgases auf einen vorbestimmten Grenzwert zu begrenzen. Dies hat den Vorteil, dass die Speicherräume, die mit Druckgas befüllt sind, bei einer Gasdruckänderung geschont werden und vorgegebene Belastungsgrenzen eingehalten werden.

Gemäß einer vorteilhaften Weiterbildung ist die Steuereinrichtung dazu eingerichtet, Energiespeicherungs-Anforderungen zu empfangen und zu verarbeiten und, wenn über eine Energiespeicherungs-Anforderung eine Kurzzeitenergiespeicherung angefordert wird, den Gasdruck des Druckgases in dem oberen und/oder in dem unteren Speicherraum zu erhöhen, und im Falle einer Energiespeicherungs-Anforderung, die eine längere Energiespeicherdauer als die Kurzzeitenergiespeicherung anfordert, flüssiges Medium von dem unteren Speicherraum in den oberen Speicherraum zu transportieren. Dies hat den Vorteil, dass das je nach voraussichtlicher Energiespeicherungsdauer ein besonders geeignetes Energiespeicherungsverfahren verwendet werden kann, nämlich bei der Kurzzeitenergiespeicherung die Speicherung in Form von erhöhtem Gasdruck, und bei längerer Energiespeicherdauer die Energiespeicherung über die potentielle Energie des flüssigen Mediums. Hierdurch lässt sich die Energieeffizienz des Pumpspeicherkraftwerks weiter erhöhen. Die Energiespeicherungsanforderungen können der Steuereinrichtung z.B. von einer Kraftwerksleitstelle oder von anderen Kraftwerken oder Energieversorgungs-Netzbetreibern zugeführt werden, z.B. über ein Datenkommunikationsnetz.

Gemäß einer vorteilhaften Weiterbildung ist das flüssige Medium Salzsole, ein Salzsole enthaltenes Flüssigkeitsgemisch oder ein anderes Flüssigkeitsgemisch. Das Druckgas ist Druckluft oder ein anderes Gas oder ein Gasgemisch. Die Salzsole kann insbesondere eine gesättigte Salzsole sein. Dies hat den Vorteil, dass als flüssiges Medium ein im unterirdischen Kavernen, insbesondere in Salzstöcken, ohnehin vorhandenes Medium genutzt werden kann.

Gemäß einer vorteilhaften Weiterbildung ist in dem oberen und/oder in dem unteren Speicherraum eine oder mehrere Tauchpumpen zur Förderung des flüssigen Mediums angeordnet. Dies hat den Vorteil, dass die Pumpen leicht installiert werden können, da sie z.B. durch die Flüssigkeitsleitung oder einen dafür vorgesehenen Schacht von der Erdoberfläche in den Speicherraum abgelassen werden kann. Durch die Ausführung als Tauchpumpe ist diese sofort einsatzbereit, wenn sie sich in dem flüssigen Medium befindet. Eine besondere Installation der Pumpe ist damit nicht erforderlich, insbesondere keine Installation in einem gesonderten Maschinenraum in der Nähe des Speicherraums.

Gemäß einer vorteilhaften Weiterbildung befindet sich zwischen dem flüssigen Medium und dem Druckgas eine mechanische und/oder chemische Trennschicht. Die mechanische Trennschicht kann z.B. nach Art einer Membran ausgebildet sein, z.B. aus einem elastischen oder nicht-elastischen Material.

Die Erfindung betrifft ein Druckgasspeicherkraftwerk gemäß Anspruch 1.

Dies hat den Vorteil, dass für die Druckgasspeicherung ein geschlossenes System aus dem ersten und dem zweiten Speicherraum vorhanden ist, so dass das Druckgas nicht wie bei bekannten Druckluftspeicherkraftwerken in die Atmosphäre entlassen werden muss. Vielmehr kann das Druckgas von dem einen in den anderen Speicherraum hin und her gefördert werden. Dies hat den Vorteil, dass auch andere Gase als Luft als Druckgas verwendet werden können, z.B. Erdgas. Ein weiterer Vorteil ist, dass hierdurch ein geschlossenes Druckgassystem geschaffen wird, bei dem beide Speicherräume bzw. alle vorhandenen Speicherräume immer unter einem gewissen Druck gehalten werden. Das Kraftwerk kann insbesondere auch ohne die Komponenten der Pumpspeicherung, d.h. den Flüssigkeitskreis, realisiert werden. Soweit das Kraftwerk als ein zuvor beschriebenes Pumpspeicherkraftwerk realisiert, kann der untere Speicherraum z.B. als erster Speicherraum dienen und der obere Speicherraum als zweiter Speicherraum, oder umgekehrt. Es können auch separate Speicherräume für den Druckgaskreis und den Flüssigkeitskreis vorgesehen sein.

Gemäß einer vorteilhaften Weiterbildung der Erfindung ist die Steuereinrichtung dazu eingerichtet, bei der Expansion von Druckgas aus einem Speicherraum den Gasdruck in diesem Speicherraum nicht unter einen vorbestimmten Mindestdruckwert, z.B. nicht unter 60 bis 100 bar, abfallen zu lassen. Dies hat den Vorteil, dass die Energieeffizienz der Gasdruckspeicherung gegenüber konventionellen Druckluftspeicherkraftwerken erheblich erhöht werden kann. Dies ist im Wesentlichen begründet durch den physikalischen Effekt, dass für die Kompression von einem Mol eines Gases von z.B. 1 bar auf 10 bar genauso viel Wärme anfällt wie bei einer Druckerhöhung von 10 bar auf 100 bar, wobei hingegen die im Gas enthaltene Kompressionsenergie p-V bei einem höheren Druckniveau entsprechend proportional höher ist. Dadurch, dass mit dem erfindungsgemäßen Kraftwerk die Gasdruckspeicherung und Expansion immer auf insgesamt relativ hohen Druckniveaus durchgeführt werden kann, kann eine relativ hohe Kompressionsenergie bei zugleich nur gering auftretenden Temperaturdifferenzen realisiert werden, so dass bei einer derartigen Fahrweise eine geringere thermische und mechanische Belastung der Kavernen, Leitungen und Kraftmaschinen auftritt.

Gemäß einer vorteilhaften Weiterbildung der Erfindung ist die Steuereinrichtung dazu eingerichtet, in dem ersten Speicherraum einen höheren Druck zu erzeugen als in dem zweiten Speicherraum und bei einer Expansion von Druckgas das Druckgas aus dem Speicherraum mit dem höheren Druck zu entnehmen, durch eine Expansionsmaschine zu führen und das entspannte Druckgas in den anderen Speicherraum zu überführen.

Nachfolgend werden Ausführungsbeispiele unter Verwendung von Zeichnungen näher erläutert.

Es zeigen

Figur 1 - ein nicht-erfindungsgemäßes Pumpspeicherkraftwerk in schematischer Darstellung und

Figur 2 - ein erfindungsgemäßes Kraftwerk ohne Flüssigkeitskreis in schematischer Darstellung.

In den Figuren werden gleiche Bezugszeichen für einander entsprechende Elemente verwendet.

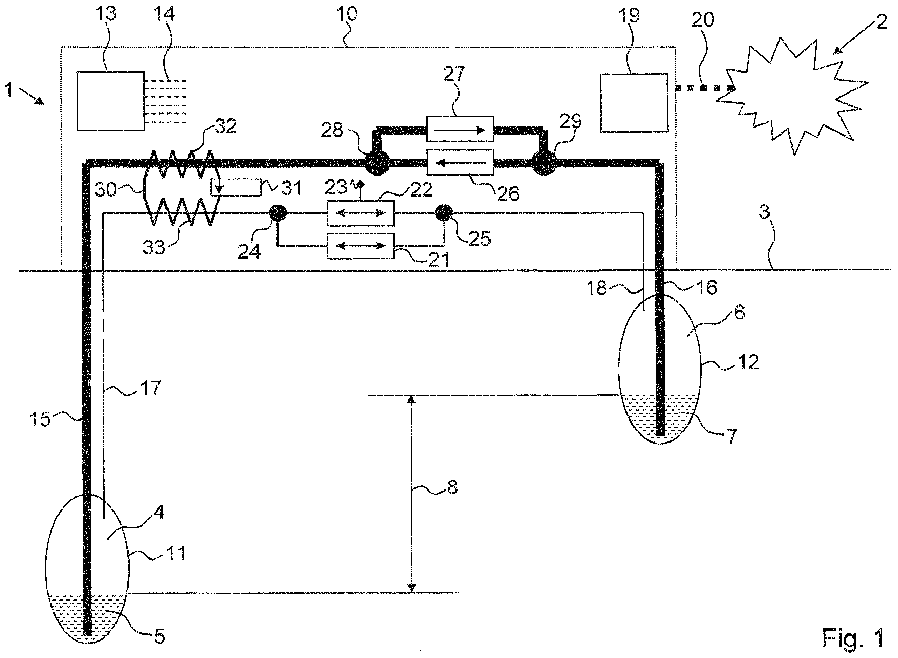

Die Figur 1 zeigt ein Pumpspeicherkraftwerk 1, das über elektrische Leitungen 20 mit einem öffentlichen oder nicht-öffentlichen elektrischen Energieversorgungsnetz 2 verbunden ist, welches auch direkte Stromanbieter oder Stromabnehmer beinhalten kann. Das Pumpspeicherkraftwerk 1 ist dazu eingerichtet, in dem Energieversorgungsnetz 2 überschüssige Energie kurz-, mittel- oder langfristig zu speichern und bei einem zusätzlichen Energiebedarf in dem Energieversorgungsnetz 2 wiederum elektrische Energie an das Energieversorgungsnetz 2 abzugeben.

Hierzu weist das Pumpspeicherkraftwerk 1 einen Untertage, d.h. in einer wesentlichen Tiefe unterhalb der Erdoberfläche 3, angeordneten unteren Speicherraum 11 auf, sowie einen oberen Speicherraum 12, der ebenfalls Untertage oder Übertage oder im Bereich der Erdoberfläche 3 angeordnet sein kann. Das Pumpspeicherkraftwerk 1 ist dazu eingerichtet, für die Energiespeicherung die potentielle Energie von in einem Flüssigkeitskreis befindlichem flüssigem Medium 5, 7 zu nutzen. Der untere Speicherraum 11 ist daher in einer größeren Teufe, d.h. einer größeren Tiefe unterhalb der Erdoberfläche 3, angeordnet als der obere Speicherraum 12. Wie in der Figur 1 dargestellt, befindet sich im unteren Speicherraum 11 ein flüssiges Medium 5, im oberen Speicherraum 12 befindet sich ein flüssiges Medium 7, wobei die flüssigen Medien 5, 7 im Normalfall dieselben Medien sind, die zwischen den Speicherräumen 11, 12 hin- und hertransportiert werden, wenn Energie gespeichert oder entnommen werden soll. Zwischen den Flüssigkeitspegeln der Flüssigkeiten 5, 7 besteht eine Höhendifferenz 8, aus der sich zusammen mit der Masse des im oberen Speicherraum 12 befindlichen flüssigen Mediums 7 die aktuell gespeicherte potenzielle Energie ergibt.

In dem unteren Speicherraum 11 befindet sich oberhalb des flüssigen Mediums 5 ein Druckgas 4. Im oberen Speicherraum 12 befindet sich oberhalb des flüssigen Mediums 7 ein Druckgas 6, bei dem es sich im Regelfall um dasselbe Gas handelt wie das Druckgas 4. In den unteren Speicherraum 11 ist eine Flüssigkeitsleitung 15 geführt, die mit oberirdisch angeordneten, später noch erläuterten Aggregaten verbunden ist. Ferner ist in den oberen Speicherraum 11 eine Druckgasleitung 17 geführt, die ebenfalls an der Erdoberfläche mit Aggregaten verbunden ist. Wie erkennbar ist, ist die Flüssigkeitsleitung 5 ungefähr bis zum unteren Bereich des unteren Speicherraums 11 in diesen eingeführt. Die Druckgasleitung 17 endet im oberen Bereich des unteren Speicherraums 11. In gleicher Weise sind in den oberen Speicherraum 12 eine Flüssigkeitsleitung 16 und eine Druckgasleitung 18 geführt, die ebenfalls mit überirdisch angeordneten Aggregaten verbunden sind. Wiederum ist die Flüssigkeitsleitung 16 etwa bis zum unteren Bereich des unteren Speicherraums 12 geführt, die Druckgasleitung 18 endet im oberen Bereich des oberen Speicherraums 12.

Das Pumpspeicherkraftwerk 1 weist eine Reihe von in Figur 1 beispielhaft überirdisch, d.h. oberhalb der Erdoberfläche 3, angeordneten Aggregaten auf, die in einem Kraftwerksblock 10 zusammengefasst sein können. Der Kraftwerksblock 10 kann z.B. als Kraftwerksgebäude ausgebildet sein. Selbstverständlich können auch einzelne oder alle Aggregate unterhalb der Erdoberfläche 3 oberflächennah oder auch in einer größeren Tiefe angeordnet sein. Aus Gründen der praktischen Realisierbarkeit des Pumpspeicherkraftwerks hat es jedoch Vorteile, die Aggregate überirdisch anzuordnen.

In dem Kraftwerksblock 10 befindet sich eine Steuereinrichtung 13, die z.B. als Steuerrechner oder Leitrechner des Pumpspeicherkraftwerks 1 ausgebildet sein kann, z.B. in Form eines Computers. Die Steuereinrichtung 13 ist über symbolisch dargestellte elektrische Leitungen 14 mit den einzelnen Aggregaten verbunden, um diese zu steuern bzw. um Messdaten von diesen aufzunehmen. Die Steuereinrichtung 13 ist ferner über die Leitungen 14 mit einer Energieanforderungsschnittstelle verbunden, über die von außen, z.B. von Kraftwerksbetreibern oder Energieversorgern, Energiespeicherungsanforderungen und Energieabgabeanforderungen empfangen werden können. Die Steuereinrichtung 13 verarbeitet diese Anforderungen und steuert die Aggregate je nach Anforderung derart, dass entweder elektrische Energie von dem Energieversorgungsnetz 2 in dem Pumpspeicherkraftwerk 1 eingespeichert wird oder daraus wieder an das Energieversorgungsnetz 2 abgegeben wird.

Das Pumpspeicherkraftwerk 1 weist insbesondere folgende Aggregate auf. Die Flüssigkeitsleitung 15 ist über eine steuerbare Ventilanordnung 28 mit einer hydraulischen Kraft- und Arbeitsmaschine 26, 27 verbunden. Die Flüssigkeitsleitung 16 ist über eine steuerbare Ventilanordnung 26 mit der hydraulischen Kraft- und Arbeitsmaschine 26, 27 verbunden. Die hydraulische Kraft- und Arbeitsmaschine 26, 27 kann z.B. eine Flüssigkeitsturbine (z.B. Wasserturbine) 26 mit Generator zur Erzeugung von elektrischer Energie, die an das Energieversorgungsnetz 2 abgegeben wird, aufweisen, sowie eine elektrisch angetriebene Pumpe 27, die einen Transport des flüssigen Mediums von dem unteren Speicherraum 11 in den oberen Speicherraum 12 mittels einer Pumpfunktion unterstützen kann. Je nach Transportrichtung des flüssigen Mediums, wie durch die Pfeile in der Flüssigkeitsturbine 26 und der Pumpe 27 angedeutet, werden die steuerbaren Ventile 28, 29 einschließlich gegebenenfalls notwendiger Nebenanlagen 19 von der Steuereinrichtung 13 entsprechend geschaltet, um entweder das flüssige Medium von dem oberen Speicherraum 12 in den unteren Speicherraum 11 zu transportieren, wenn Energie an das Energieversorgungsnetz 2 abgegeben werden soll, oder flüssiges Medium von dem unteren Speicherraum in den oberen Speicherraum 12 zu transportieren, wenn Energie von dem Energieversorgungsnetz 2 in dem Pumpspeicherkraftwerk 1 eingespeichert werden soll.

Die Komponenten 11, 12, 15, 16, 26, 27, 28, 29 bilden damit einen Flüssigkeitskreis.

Die Druckgasleitung 17 ist über eine steuerbare Ventilanordnung 24 mit einer Druckgas-Kraft- und Arbeitsmaschine 21, 22 verbunden. Die Druckgasleitung 18 ist über eine steuerbare Ventilanordnung 25 mit der Druckgas-Kraft- und Arbeitsmaschine 21, 22 verbunden. Die Druckgas-Kraft- und Arbeitsmaschine 21, 22 kann z. B. eine Expansionsmaschine 21, z.B. in Form einer Gasturbine mit Generator, und eine Kompressionsmaschine 22, z.B. in Form eines elektrisch angetriebenen Kompressors, aufweisen. Die Kompressionsmaschine 22 ist mit einem zweiseitigen Pfeil gekennzeichnet, denn sie ist je nach Steuerung der steuerbaren Ventilanordnungen 24, 25 durch die Steuereinrichtung 13, in der Lage, Druckgas von dem unteren Speicherraum 11 in den oberen Speicherraum 12 zu fördern und dabei den Gasdruck in dem unteren Speicherraum 11 zu erhöhen, und entsprechend umgekehrt Druckgas von dem unteren Speicherraum 11 in den oberen Speicherraum 12 zu fördern und dabei den Gasdruck in dem oberen Speicherraum 12 zu erhöhen. Hierbei kann der Gasdruck in dem unteren Speicherraum 11 und im oberen Speicherraum 12 jeweils separat festgelegt werden, wobei die Kompressionsmaschine 22 immer dann aktiviert wird, wenn Druckgas von einem Speicherraum mit einem niedrigeren Gasdruck in einen Speicherraum mit einem höheren Gasdruck transportiert werden soll. Die Kompressionsmaschine 22 kann z.B. mit einem Anschluss 23 verbunden sein, über den ggf. zusätzliches Druckgas aus der Atmosphäre oder einem mit dem Anschluss 23 verbundenen Gasnetz in den Druckgaskreis eingespeichert werden kann.

Sofern Druckgas von einem Speicherraum mit höherem Gasdruck in einen Speicherraum mit niedrigerem Gasdruck transportiert werden soll, wird die Expansionsmaschine 21 durch Steuerung der steuerbaren Ventilanordnungen 24, 25 aktiviert. Durch das durch die Expansionsmaschine 21 fließende, expandierende Druckgas kann von der Expansionsmaschine 21 elektrische Energie erzeugt werden und an das Energieversorgungsnetz 2 abgegeben werden. Die Expansionsmaschine 21 kann ebenfalls mit dem Anschluss 23 verbunden oder verbindbar sein, um im Druckgassystem eventuell vorhandene zu große Gasmengen abzulassen.

Die Komponenten 11, 12, 17, 18, 21, 22, 23, 24, 25 bilden damit einen Druckgaskreis.

Der Druckgaskreis des Pumpspeicherkraftwerks 1 kann einerseits dazu verwendet werden, das Hochpumpen des flüssigen Mediums 5 von dem unteren Speicherraum 11 in den oberen Speicherraum 12 in Folge eines Gasüberdrucks zu bewirken oder zumindest die Funktion der Pumpe 27 zu unterstützen (Hydro-Betriebsmodus des Kraftwerks). Zusätzlich kann der Druckgaskreis dazu verwendet werden, Energie von dem Energieversorgungsnetz 2 in Form von erhöhtem Gasdruck in dem Pumpspeicherkraftwerk 1 zwischenzuspeichern und bei Bedarf durch Expansion in der Expansionsmaschine 21 wieder an das Energieversorgungsnetz 2 abzugeben. Auf diese Weise kann ein kombiniertes Pumpspeicher-Druckgasspeicher-Kraftwerk realisiert werden (Turbo-Betriebsmodus des Kraftwerks).

Neben dem Flüssigkeitskreis und dem Druckgaskreis ist ein dritter Kreis in dem Pumpspeicherkraftwerk 1 vorgesehen, und zwar ein Wärmekreislauf 33. Der Wärmekreislauf 33 verbindet die Flüssigkeitsleitungen 15, 16 thermisch mit den Druckgasleitungen 17, 18. Wie in der Figur 1 erkennbar ist, kann der Wärmekreislauf 33 z. B. durch einen Wärmetauscher 32, der von dem flüssigen Medium durchströmt wird, und einen Wärmetauscher 33, der von dem Druckgas durchströmt wird, gebildet werden, wobei die Wärmetauscher 32, 33 miteinander verbunden sind. Durch die Wärmetauscher 32, 33 kann ein Wärmetauschermedium, in der Regel ein flüssiges Medium, durch eine von der Steuereinrichtung 13 steuerbare Wärmekreispumpe 31 gepumpt werden, um den Wärmeaustausch zwischen dem Flüssigkeitskreis und dem Druckgaskreis durchzuführen. Die Steuereinrichtung 13 kann die Wärmekreispumpe 31 bei Bedarf ein- und ausschalten.

Der Wärmekreislauf 30 kann auch auf andere Art realisiert werden als in Figur 1 dargestellt, so z. B. dadurch, dass die jeweilige Flüssigkeitsleitung 15, 16, innerhalb der jeweiligen Druckgasleitung 17, 18 angeordnet ist, so dass das Druckgas in dem verbleibenden Ringraum transportiert wird.

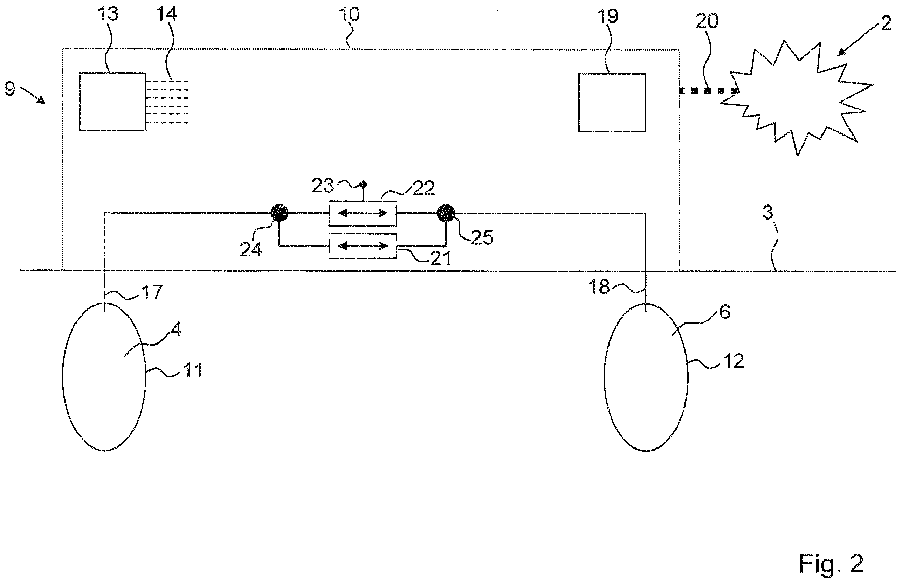

Die Figur 2 zeige ein Kraftwerk 9, das lediglich den zuvor beschriebenen Druckgaskreis aufweist, d.h. keinen Flüssigkeitskreis. Das Kraftwerk wird dann in einem sogenannten Aero-Modus betrieben. Die in Figur 2 dargestellten Komponenten, deren Bezugszeichen denen aus Figur 1 gleichen, entsprechen den bereits anhand der Figur 1 beschriebenen Komponenten. Im Unterschied zum Pumpspeicherkraftwerk gemäß Figur 1 können beim Kraftwerk 9 gemäß Figur 2 die Speicherräume 11, 12 in beliebigen Teufenlagen unterirdisch oder ggf. auch oberirdisch angeordnet, so dass auch andere vorhandene Formationen genutzt werden können, um das Kraftwerk 9 zu errichten. Im Gegensatz zu bekannten Druckluftspeicherkraftwerken weist das Kraftwerk 9 den grundsätzlich geschlossenen Druckgaskreis mit den zwei Speicherräumen 11, 12 auf, zwischen denen das Druckgas 4, 6 sozusagen pendeln kann. In Folge des geschlossenen Systems kann in den Speicherräumen 11, 12 immer ein gewisser Mindestdruck des Druckgases 4, 6 aufrechterhalten werden, so dass ein Energiespeicherbetrieb mit erheblich höherer Energieeffizienz realisiert werden kann als bei bekannten Druckluftspeicherkraftwerken, bei denen nur ein Speicherraum vorhanden ist und die gespeicherte Luft immer vom Atmosphäreniveau aus verdichtet wird und wieder auf das Atmosphäreniveau expandiert wird.

Nachfolgend werden weitere Bespiele für den Betrieb des Pumpspeicherkraftwerks 1 bzw. des Kraftwerks 9 gegeben. Die zuvor genannten Speicherräume 11, 12 werden auch als Kavernen bezeichnet.

Es ist nicht ohne weiteres möglich, Flüssigkeiten zwischen zwei Hohlräumen in unterschiedlicher Teufenlage hin- und herzupumpen. Üblicherweise wird hierzu die Pumpe unterhalb des untersten Beckens angebracht. Der Grund hierfür ist, dass eine Pumpe einen Vordruck braucht, damit die Flüssigkeit unter Gefälle in die Pumpe fließen kann. Pumpen können nur Druck aufbauen und eine Flüssigkeit hochpumpen. Das Saugen von Flüssigkeiten mit einer Pumpe ist aus physikalischen Gründen nur bis zu Höhen von ca. 8 - 10 m möglich. Bei größeren Höhendifferenzen würde die Strömung abreißen und die Pumpe leerlaufen.

Zuvor und im Folgenden wird ein Verfahren zur Speicherung von potentieller Energie in einem Untertage-Pumpspeicherkraftwerk beschrieben. Wie bereits dargelegt, können die für die Pumpspeicherung erforderliche Ober- und Unterbecken als unterirdische Hohlräume ausgeführt werden. Das Manko, dass die Flüssigkeit zwischen beiden Becken nicht ohne weiteres durch oberirdisch angeordnete Pumpen erfolgen kann, dies aber technisch und auch wirtschaftlich wünschenswert ist, wird bei dem hier beschriebenen Verfahren dadurch ausgeglichen, dass beide Kavernen mit einer weiteren Leitung verbunden und die Kavernen mit einem Gasdruck beaufschlagt werden. Dieser Gasdruck in den Kavernen kann so hoch sein, dass sich für die Flüssigkeit in den anderen Leitungen ein Druck an der Pumpe ergibt, der groß genug ist, das Umpumpen der Flüssigkeit zu ermöglichen. Dieser Druck sollte höher als der an der Oberfläche herrschende Luftdruck sein, genauere Werte werden in der nachfolgenden Beschreibung eines Beispiels gegeben.

Das Einbringen eines komprimierten Gases in das System erfordert ebenfalls einen beträchtlichen Energieaufwand, der ebenfalls zur Energiespeicherung genutzt werden kann. In der hier beschriebenen Erfindung kann diese gespeicherte Energie ebenfalls in Arbeit an einer mit Gas betriebenen Turbine (Entspannungsturbine) umgewandelt werden. Der in dem System erforderliche Gasdruck wird durch einen Kompressor erzeugt.

Soll das in dem System vorhandene Gas komprimiert und entspannt werden, so kann dies ebenfalls von einer in die andere Kaverne erfolgen. Hierzu wird eine der Kavernen auf einen höheren Druck gebracht, vorzugsweise die untere Kaverne. Dies kann durch einen vorhandenen Kompressor erfolgen oder aber durch das Pumpen der Flüssigkeit, wobei die Kavernen auf geeignete Art voneinander getrennt werden.

Erfolgt die Kompression über den Kompressor, dann entsteht Wärme. Diese Wärme kann über einen Wärmetauscher an die im Gegenstrom fließende Flüssigkeit abgegeben werden und in dieser gespeichert werden. Bei der Entspannung kann die Wärme aus dem umgekehrten Flüssigkeitsstrom wieder entnommen werden, dem Gas zugeführt werden und in der Entspannungsturbine in Arbeit umgewandelt werden. Als Wärmetauscher kann eine geeignete technische Einrichtung gewählt werden oder aber der Wärmeaustausch kann in den Bohrungen erfolgen, wenn sowohl das Gas als auch die Flüssigkeit in nur einer Bohrung fließen, wobei die Flüssigkeit im Steigrohr fließt und das Gas im Ringraum. Derartige Anordnungen werden in der Erdöl- und Erdgasspeicherung standardmäßig verwendet. Gas und Flüssigkeit fließen in den Bohrungen im Gegenstrom.

Ein weiterer Vorteil des bisher beschriebenen Systems besteht auch darin, dass das Gas nicht vollständig entspannt wird, sondern in einer zweiten Kaverne in bereits komprimierten Zustand gespeichert wird. Wird das Gas nicht von Atmosphärendruck aus komprimiert, sondern von einem höheren Druck ausgehend, dann wird bedeutend mehr Energie in der Volumenarbeit gespeichert und nicht in Wärme umgewandelt, was sich positiv im Wirkungsgrad darstellt. Dieser Vorteil wird ebenfalls in dem nachfolgenden Beispiel erläutert.

Die Hohlräume, im Folgenden Kavernen genannt, werden in unterschiedlichen Teufen erstellt. Der Topp der oberen Kaverne 12 soll sich in einer Teufe von 900 m befinden, der Topp der unteren Kaverne 11 in einer Teufe von 1650 m. Die Kavernen 11, 12 sollen jeweils ein Volumen von 500 000 m3 besitzen. In jede der Kavernen werden zwei Bohrungen niedergebracht, wobei eine bereits aus dem Herstellungsvorgang der Kavernen durch Aussolen stammen kann. Die Bohrungen, in der die Flüssigkeit gepumpt werden sollen, haben einen effektiven Durchmesser von 30 inch (762 mm), und die Bohrungen, in denen das komprimierte Gas pendeln soll von 20 inch (508 mm). Derartige Bohrungen lassen sich standardmäßig herstellen; aus diesem Grunde sind auch die in der Bohrindustrie üblichen US-Maße in inch verwendet worden. Die in dem System verwendete Flüssigkeit soll eine Dichte von 1 250 kg/m3 haben. Hierdurch ergibt sich ein durch die Flüssigkeitssäule hervorgerufener Druck am Topp der unteren Kaverne von ca. 202 bar. Um einen Druck der Flüssigkeitssäule an der Erdoberfläche von 4 bar zu erhalten, muss die untere Kaverne insgesamt mit einem Gasdruck von ca. 206 bar gemessen am Topp der Kaverne beaufschlagt werden. In der oberen Kaverne, ergibt sich damit (gemessen am Topp der Kaverne) ein Druck von ca. 187 bar, wenn als Gas beispielsweise Luft verwendet wird. Der maximale Druck, mit dem die obere Kaverne beaufschlagt werden kann beträgt ca. 190 bar. Dieser Druck ist durch gebirgsmechanische Eigenschaften des Gesteins begrenzt und kann von dem hier angegebenen Wert abweichen. Dieser maximale Druck ist auf jeden Fall einzuhalten. Der maximal zulässige Betriebsdruck der unteren Kaverne wird bei dieser Vorgehensweise ebenfalls eingehalten.

Beide Kavernen werden mit einer Leitung verbunden in der die Flüssigkeit umgepumpt wird und mit einer Leitung in der Gas pendeln kann. Die untere Kaverne kann über diese Leitung mit Druck beaufschlagt werden. Wenn der Druck im System durch die komprimierte Luft über dem hydrostatischen Druck der Flüssigkeit gehalten wird, kann die Flüssigkeit mit einer obertägig angebrachten Pumpe von der unteren in die obere Kaverne gefördert werden. Weiterhin kann zur Stromerzeugung die Flüssigkeit aus der oberen Kaverne über die Turbine geleitet werden.

Die Druckverluste in den Leitungen betragen für das Gas und für die Flüssigkeit ca. 3 bar, die Fließgeschwindigkeit für das Gas beträgt ca. 8 m/s für die Flüssigkeit ca. 3,5 m/s.

In dem System lässt sich ca. 1 200 MWh als potentielle Energie in der Flüssigkeit speichern. Bei den angegebenen Fließraten beträgt die Leistung an der Turbine 26 ca. 10 MW, bei einer Dauer von 84 h für die Entladung. Dieses System ist vorzugsweise für eine Langzeitspeicherung über mehrere Tage geeignet. Eine Erhöhung der Leistung kann dadurch erreicht werden, dass Bohrungen mit größerem Durchmesser verwendet werden oder aber mehrere Bohrungen parallel eingesetzt werden.

Für die Stromspeicherung sind sowohl langfristige Speicherzeiträume (mehrere Tage) als auch kurzzeitige Speicherzyklen (Tag/Nacht) oder aber kurzzeitige Leistungsspitzen abzudecken.

Das System kann ebenfalls zur kurzzeitigen Leistungserbringung genutzt werden. Wird z.B. durch Aufpumpen mit Wasser der Druck in der unteren Kaverne 11 um 20 bar erhöht, dann kann durch eine darauffolgende Entspannung aus dem System eine Leistung von ca. 50 MW für ca. 2 h erreicht werden, wobei die Temperaturänderung in der Kaverne nur ca. 10 °C beträgt. Dieser Vorgang kann zur kurzzeitigen Leistungserbringung benutzt werden.

Bei der Kompression eines Gases entsteht Wärme, wenn das Gas keine Arbeit leistet, umgekehrt muss bei der Entspannung Energie in Form von Wärme zugeführt werden, damit das Gas Arbeit leisten kann und hierbei nicht zu stark abkühlt. In den bisher vorgeschlagenen Prozessen zur Speicherung von Energie wird Luft aus der Atmosphäre komprimiert und in einem Hohlraum gespeichert. Dieser Hohlraum ist im großtechnischen Maßstab z. B. eine Salzkaverne, wie oben beschrieben. Die Drücke in solch einer Kaverne betragen dann je nach Teufe ca. 150 bis 250 bar.

Wenn ein Gas von Atmosphärendruck (~1 bar) auf 150 bar komprimiert wird, dann erfährt es eine Temperaturerhöhung von ca. 530 Kelvin. Wenn dieses komprimierte Gas in einem Volumen von 1 m³ gespeichert wird, fallen bei diesem Prozess ca. 25 kWh an Wärme an. Die in der Spannung des Gases enthaltene Energie (p·V) beträgt hingegen nur ca. 4,2 kWh. Bei der vollständigen Entspannung muss wiederum die gleiche Wärmemenge zugeführt werden, da ansonsten Vereisungsprozesse in der Anlage auftreten. Kann die bei der Kompression anfallende Wärme nicht gespeichert werden und dem Prozess bei der Entspannung nicht wieder zugeführt werden, dann hat der Prozess einen sehr geringen Wirkungsgrad von ca. 14 %, wobei sich der Wirkungsgrad aus dem Verhältnis der mechanischen Arbeit w und der gesamt aufgewendeten Energie (Wärme q plus Arbeit w) ergibt (4,2/(25+4,2)).

Die Kompression eines Gases von Atmosphärendruck erfolgt im technischen Maßstab wegen der starken Erwärmung stufenweise, wobei das Gas zwischendurch abgekühlt werden muss. Dies lässt sich am Beispiel der isothermen Kompression veranschaulichen. Die bei der isothermen Kompression anfallende Wärmemenge berechnet sich zu:

$$q = nRT \cdot \ln\left(p_1 / p_2\right)$$

q ist die Wärmemenge, n die Gasmenge in mol, R die allgemeine Gaskonstante, T die Temperatur, $p_1$ der Eingangsdruck, $p_2$ der Ausgangsdruck.

Dies bedeutet, dass für die Kompression von einem Mol eines Gases von 1 bar auf 10 bar genauso viel Wärme anfällt, wie von 10 bar auf 100 bar, wobei hingegen die im Gas enthaltene Kompressionsenergie p·V (p ist der Druck, V das Volumen) in der ersten Stufe niedriger ist als in der zweiten und die Temperaturänderung die gleiche ist.

Aus diesen Betrachtungen ergibt sich, dass es vorteilhaft ist, zur Speicherung von Energie von einem höheren Druckniveau auszugehen.

Dies kann erreicht werden, wenn der Prozess nicht zwischen z. B. 1 bar und 150 bar sondern beispielsweise zwischen 130 bar und 150 bar stattfindet. Das bei der Entspannung anfallende Gas muss dann in einem weiteren Hohlraum gespeichert werden, wo es für die Kompression wieder zur Verfügung stünde. Bei diesem Prozess wäre die anfallende Wärmemenge bezogen auf 1 m³ Hohlraumvolumen 0,7 kWh und die Kompressionsenergie beträge ca. 0,6 kWh. Der Wirkungsgrad wäre in diesem Fall 46 %.

Für diese Art der Energiespeicherung können die oben beschriebenen Kavernen benutzt werden, wobei die Flüssigkeit und die dafür erforderlichen Einrichtungen und Leitungen entfallen kann. Es ist ebenfalls nicht erforderlich, dass die Kavernen in unterschiedlicher Teufe angebracht werden, kann jedoch von Vorteil sein, um die gebirgsmechanischen Erfordernisse besser zu erfüllen. Im Falle des hier beschriebenen Systems soll die untere Kaverne 11 auf einen Druck von 280 bar gebracht werden, der Druck an der Oberfläche beträgt dann ca. 230 bar. Der Druck in der Kaverne soll um 20 bar entspannt werden, dadurch, dass Gas mit hoher Rate aus der Kaverne entnommen wird. Die Temperaturänderung in der Kaverne beträgt ca. 7 °C. Dieses Gas wird der Entspannungsturbine 21 zugeführt und dort mit einer Druckdifferenz von 70 bar entspannt. Hierbei erfährt das Gas eine weitere Temperaturerniedrigung von ca. 35 °C. Bei diesem Prozess wird Arbeit verrichtet, bei einer Fließrate von 2 Millionen Normkubikmeter pro Stunde beträgt die Leistung ca. 30 MW.

Das Gas wird dann in der zweiten Kaverne 12 gespeichert, bei einem Druck zwischen ca. 130 bis 150 bar, wenn diese Kaverne die gleiche Größe wie die erste hat. Aus der zweiten Kaverne 12 kann das Gas dann wieder auf den hohen Druck in der ersten Kaverne gebracht werden, wobei Druck- und Temperaturänderungen in umgekehrter Richtung erfolgen.

Dieser Prozess hat den Vorteil, dass in den Kavernen Druck- und Temperaturänderungen auftreten, die nach den derzeit für die Untertage-Erdgasspeicherung geltenden Richtlinien zulässig sind. Die Kühlung und das Vorheizen des Gases kann entfallen und sowohl die obertägigen Anlagen als auch die Bohrungen und Kavernen werden nicht durch übermäßige Temperatur- und Druckänderungen belastet.

## Bezeichnungsliste

1 Pumpspeicherkraftwerk
2 Energieversorgungsnetz und/oder direkte Stromanbieter und Abnehmer
3 Erdoberfläche
4 Druckgas
5 flüssiges Medium
6 Druckgas
7 flüssiges Medium
8 Höhendifferenz
9 Kraftwerk
10 Kraftwerksblock
11 unterer bzw. erster Speicherraum
12 oberer bzw. zweiter Speicherraum
13 Steuereinrichtung
14 elektrische Leitungen
15 Flüssigkeitsleitung
16 Flüssigkeitsleitung
17 Druckgasleitung
18 Druckgasleitung
19 Nebenanlagen
20 elektrische Leitungen
21 Expansionsmaschine
22 Kompressionsmaschine
23 Druckgasanschluss
24 steuerbare Ventilanordnung
25 steuerbare Ventilanordnung
26 Flüssigkeitsturbine
27 Pumpe
28 steuerbare Ventilanordnung
29 steuerbare Ventilanordnung
30 Wärmekreislauf
31 Wärmemediumpumpe
32 Wärmetauscher
33 Wärmetauscher

## Patentansprüche

1. Druckgasspeicherkraftwerk mit wenigstens einem ersten und einem davon getrennten zweiten Speicherraum (11, 12) in gleicher oder unterschiedlicher Teufenlage, und mit jeweils wenigstens einer in den ersten Speicherraum (11) und in den zweiten Speicherraum (12) geführten Druckgasleitung (17, 18), die mit einer Druckgas-Kraft- und Arbeitsmaschine des Druckgasspeicherkraftwerks verbunden oder mit der Druckgas-Kraft- und Arbeitsmaschine über schaltbare Ventile verbindbar sind, wobei die Druckgas-Kraft- und Arbeitsmaschine (21, 22) zum wahlfreien Erzeugen eines Gasdrucks eines Druckgases (4, 6) jeweils in dem ersten und dem zweiten Speicherraum (11, 12) in unterschiedlicher Größe eingerichtet ist, und mit einer Steuereinrichtung (13), die dazu eingerichtet ist, bei der Expansion von Druckgas (4, 6) aus einem Speicherraum (11, 12) das expandierte Druckgas in den anderen Speicherraum (11, 12) zu überführen, wobei die Druckgas-Kraft- und Arbeitsmaschine wenigstens eine Kompressionsmaschine (22) zur Erzeugung komprimierten Druckgases und eine Expansionsmaschine (21) zur Abgabe von elektrischer Energie an ein Energieversorgungsnetz (2) aufweist, wobei das Druckgasspeicherkraftwerk zur Erzeugung und Abgabe der elektrischen Energie an das Energieversorgungsnetz (2) allein durch Expansion des Druckgases (4, 6) eingerichtet ist, wobei die Steuereinrichtung (13) dazu eingerichtet ist, bei der Expansion von Druckgas (4, 6) aus einem Speicherraum (11, 12) den Gasdruck in diesem Speicherraum (11, 12) nicht unter einen vorbestimmten Mindestdruckwert von 60 bar abfallen zu lassen.

2. Kraftwerk nach Anspruch 1, **dadurch gekennzeichnet, dass** die Steuereinrichtung (13) dazu eingerichtet ist, in dem ersten Speicherraum (11) einen höheren Druck zu erzeugen als in dem zweiten Speicherraum (12) und bei einer Expansion von Druckgas (4, 6) das Druckgas (4, 6) aus dem Speicherraum mit dem höheren Druck zu entnehmen, durch eine Expansionsmaschine (22) zu führen und das entspannte Druckgas (4, 6) in den anderen Speicherraum (11, 12) zu überführen.

3. Verfahren zur Energiespeicherung mittels eines Kraftwerks nach einem der Ansprüche 1 bis 2, wobei bei der Expansion von Druckgas (4, 6) aus einem Speicherraum der Gasdruck in diesem Speicherraum nicht unter einen vorbestimmten Mindestdruckwert von 60 bar abgesenkt wird.

**4.** Verfahren nach Anspruch 3, **dadurch gekennzeichnet, dass** bei der Expansion von Druckgas (4, 6) aus einem Speicherraum (11, 12) das expandierte Druckgas (4, 6) in den anderen Speicherraum (11, 12) überführt wird.

**5.** Verfahren nach Anspruch 4, **dadurch gekennzeichnet, dass** in dem ersten Speicherraum (11) ein höherer Druck erzeugt wird als in dem zweiten Speicherraum (12) und bei einer Expansion von Druckgas (4, 6) das Druckgas (4, 6) aus dem Speicherraum (11, 12) mit dem höheren Druck entnommen wird, durch eine Expansionsmaschine (22) geführt wird und das entspannte Druckgas (4, 6) in den anderen Speicherraum (11, 12) überführt wird, wobei von der Expansionsmaschine (22) Energie an ein öffentliches und/oder nicht-öffentliches Energieversorgungsnetz (2) und/oder direkt an Stromabnehmer abgegeben wird.

**Claims**

**1.** A compressed-air energy storage power plant, comprising at least one first and, separate therefrom, one second storage space (11, 12) at the same depth level or at differing depth levels, and comprising at least one pressurized gas line (17, 18) that is/are routed in the first storage space (11) and in the second storage space (12) respectively and that is/are connected to the pressurized gas power engine and/or work machine to a pressurized gas power engine and/or work machine of the power plant or can be connected via switchable valves, wherein the pressurized gas power engine and/or work machine (21, 22) is set up to optionally generate a gas pressure of a pressurized gas (4, 6) of differing magnitudes in the first and the second storage space (11, 12) respectively, and comprising a control means (13), which is set up, upon the expansion of pressurized gas (4, 6) out of one storage space (11, 12), to transfer the expanded pressurized gas into the other storage space (11, 12), wherein the pressurized gas power engine and/or work machine comprises at least a compression machine (22) for generation of compressed pressurized gas and an expansion machine (21) for delivery of electrical energy to an energy supply network (2), wherein the compressed-air energy storage power plant is set up for generation and delivery of the electrical energy to the energy supply network (2) solely through expansion of the pressurized gas (4, 6), wherein the control means (13) is set up, upon the expansion of pressurized gas (4, 6) out of a storage space (11, 12), not to allow the gas pressure in this storage space (11, 12) to fall below a predefined minimum pressure value of 60 bar.

**2.** The power plant as claimed in claim 1, **characterized in that** the control means (13) is set up to generate a higher pressure in the first storage space (11) than in the second storage space (12) and, upon an expansion of pressurized gas (4, 6), to take the pressurized gas (4, 6) out of the storage space that has the higher pressure, route it through an expansion machine (22), and transfer the expanded pressurized gas (4, 6) into the other storage space (11, 12).

**3.** A method for energy storage by means of a power plant as claimed in any one of claims 1 to 2, wherein upon the expansion of pressurized gas (4, 6) out of a storage space, the gas pressure in this storage space does not fall below a predefined minimum pressure value of 60 bar.

**4.** The method as claimed in claim 3, **characterized in that**, upon the expansion of pressurized gas (4, 6) out of the storage space (11, 12), the expanded pressurized gas (4, 6) is transferred into the other storage space (11, 12).

**5.** The method as claimed in claim 4, **characterized in that** a higher pressure is generated in the first storage space (11) than in the second storage space (12) and, upon an expansion of pressurized gas (4, 6), the pressurized gas (4, 6) is taken from the storage space (11, 12) that has the higher pressure, routed through an expansion machine (22), and the expanded pressurized gas (4, 6) is transferred into the other storage space (11, 12), wherein energy is delivered by the expansion machine (22) to a public and/or non-public energy supply network (2) and/or directly to electricity consumers.

**Revendications**

**1.** Centrale de stockage de gaz sous pression comprenant au moins un premier et un deuxième espace de stockage (11, 12), séparés l'un de l'autre, à la même profondeur ou à des profondeurs différentes, et comprenant au moins un conduit de gaz sous pression (17, 18) qui est guidé jusque dans le premier espace de stockage (11) et dans le deuxième espace de stockage (12) et qui est raccordé à une machine motrice à gaz sous pression et de travail de la centrale de stockage de gaz sous pression ou qui est raccordé à la machine motrice à gaz sous pression et de travail par des vannes commutables, la machine motrice à gaz sous pression et de travail (21, 22) étant conçue pour générer sélectivement une pression de gaz d'un gaz sous pression (4, 6) dans les premier et deuxième espaces de stockage (11, 12) à différentes grandeurs, et comprenant un dispositif de commande (13) qui est conçu pour transférer le gaz sous pression détendu d'un espace de stockage (11, 12) dans l'autre espace de stockage (11, 12) pendant la détente du gaz sous pression (4, 6), la machine motrice de gaz sous pression et de travail comportant au moins une machine de compression (22) destinée à générer du gaz sous pression comprimé et une machine de détente (21) destinée à fournir de l'énergie électrique à un réseau d'alimentation en énergie (2), la centrale électrique de stockage de gaz sous pression étant conçue pour générer et fournir de l'énergie électrique au réseau d'alimentation en énergie (2) uniquement par détente du gaz sous pression (4, 6), le dispositif de commande (13) étant conçu pour ne pas laisser la pression de gaz dans cet espace de stockage (11, 12) chuter au-dessous d'une valeur de pression minimale prédéterminée de 60 bars lors de la détente du gaz sous pression (4, 6) depuis un espace de stockage (11, 12).

2. Centrale selon la revendication 1, **caractérisée en ce que** le dispositif de commande (13) est conçu pour générer dans le premier espace de stockage (11) une pression supérieure à celle dans le deuxième espace de stockage (12) et pour retirer le gaz sous pression (4, 6) de l'espace de stockage à la pression la plus élevée lors d'une détente de gaz sous pression (4, 6), pour le guider à travers une machine de détente (22) et pour transférer le gaz sous pression détendu (4, 6) dans l'autre espace de stockage (11, 12).

3. Procédé de stockage d'énergie au moyen d'une centrale selon l'une des revendications 1 et 2, lors de la détente du gaz sous pression (4, 6) depuis un espace de stockage, la pression de gaz dans cet espace de stockage n'étant pas abaissée au-dessous d'une valeur de pression minimale prédéterminée de 60 bars.

4. Procédé selon la revendication 3, **caractérisé en ce que**, lors de la détente du gaz sous pression (4, 6) depuis un espace de stockage (11, 12), le gaz sous pression détendu (4, 6) est transféré dans l'autre espace de stockage (11, 12).

5. Procédé selon la revendication 4, **caractérisé en ce qu'**une pression est générée dans le premier espace de stockage (11) qui supérieure à la pression dans le deuxième espace de stockage (12) et, lors d'une détente de gaz comprimé (4, 6), le gaz sous pression (4, 6) est retiré de l'espace de stockage (11, 12) à une pression plus élevée, est guidé à travers une machine de détente (22) et le gaz sous pression détendu (4, 6) est transféré dans l'autre espace de stockage (11, 12), de l'énergie étant fournie par la machine de détente (22) à un réseau d'alimentation en énergie public et/ou non public (2) et/ou directement à des récepteurs de courant.

Fig. 1

EP 2 773 866 B1

Fig. 2

**EP 2 773 866 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0212692 B1
- US 4353214 A